Europäisches Patentamt

European Patent Office

Office européen des brevets

(11) Veröffentlichungsnummer: **0 395 063**
A2

# (12) EUROPÄISCHE PATENTANMELDUNG

(21) Anmeldenummer: 90107965.7

(22) Anmeldetag: 26.04.90

(51) Int. Cl.⁵: **G02F 3/00**

(30) Priorität: 27.04.89 SU 4684149

(43) Veröffentlichungstag der Anmeldung:
**31.10.90 Patentblatt  90/44**

(84) Benannte Vertragsstaaten:
**AT BE CH DE FR GB IT LI NL SE**

(71) Anmelder: **TSENTR NAUCHNO-TEKHNICHESKOGO TVORCHESTVA MOLODEZHI " LINAX"**
**Ulitsa Marshala Govorova, 34**
**Leningrad(SU)**

(72) Erfinder: **Eremin, V.K.**
**ulitsa Ushinskogo, 12, kv.17**
Leningrad(SU)
Erfinder: **Lomashevich, S.A.**
**Pargolovo, ulitsa Zavodskaya, 24, kv.27**
Leningrad(SU)
Erfinder: **Strokan, N.B.**
**prospekt Morisa Toreza, 9, kv.33**
Leningrad(SU)
Erfinder: **Semenova, G.A.**
**ulitsa Turku, 9, korpus 5, kv.201**
**Leningrad(SU)**

(74) Vertreter: **Sparing Röhl Henseler**
**Patentanwälte European Patent Attorneys**
**Rethelstrasse 123**
**D-4000 Düsseldorf 1(DE)**

(54) **Bistabiler optischer Trigger.**

(57) Der Erfindung liegt der Effekt der optischen Bistabilität und der Umverteilung des elektrischen Feldes in Halbleiterstrukturen infolge der Bildung ungleichgewichtiger Träger unter Einwirkung optischer Strahlung zugrunde. Der Trigger umfaßt zwei gleiche Zellen (1), die durch einen elektrischen Kreis verbunden sind. Das Umschalten der optischen Kanäle (I, II) erfolgt durch das Steuerlicht i, das über die voneinander getrennten Kanäle (I, II) kommt.

FIG.1

EP 0 395 063 A2

### Bistabiler optischer Trigger

Die Erfindung betrifft das Gebiet der Auswertung von Informationen, die durch optische Signale übertragen werden, wie Vorrichtungen der optischen Logik und des Kommutierens optischer Signale durch Halbleiterstrukturen.

Bekannt ist eine Vorrichtung "Optischer Transistor und logische Schaltkreise auf dessen Grundlage" (USA-Patent Nr. 4,382,660), bei dem das optische Signal das Passieren von Licht durch optisches Medium in die Richtung steuert, die senkrecht zur Ausbreitungsrichtung des Steuersignals ist. Eine solche Vorrichtung der "Photonik" gestattet es, die Leistung des Eingangssignals zu verstärken. Zu den wichtigsten Anwendungsbereichen solcher optischer Bauelemente gehören logische Schaltungen, optische Multivibratoren, Impulsgeneratoren und Kommutationselemente.

Die Herstellung von Multivibratoren macht jedoch die Entwicklung optischer Kreise erforderlich, die zwei und mehr elementare optische Bauelemente enthalten, für die zugleich beträchtliche Pegel der Steuersignale notwendig sind, selbst wenn dünne dielektrische oder halbleitende Filme als optisches Medium verwendet werden, weil in einer solchen Vorrichtung die Eigenschaften der Resonanzsysteme nicht angewandt werden.

Von bekannten Vorrichtungen ist das "Nichtlineare optische Gerät" (USA-Patent Nr. 3,813,605) seinem technischen Wesen nach der vorliegenden Vorrichtung besonders nah. Das Gerät gestattet es, den Zustand der Sättigung des Absorptionskoeffizienten und der Abhängigkeit des Brechungsindexes des Mediums, das sich zwischen den Spiegeln befindet, zu erreichen. Die Eigenschaften des Mediums werden durch die optische Aufpumpstrahlung gesteuert, die auch zum Aufhellen führt, die dann eintritt, wenn das Fabry-Perot-Interferometer Resonanzeigenschaften aufweist. Zu den Vorteilen dieser Vorrichtung gehören Schnelligkeit, kleine Abmessungen sowie die Möglichkeit der Steuerung nach getrennten und übereinstimmenden Kanälen für die Aufpumpstrahlung und nach Informationsstrahlung. Zu den Nachteilen der bekannten Vorrichtung gehören:

- das Fehlen des zweiten Signals;
- die Transmissionssteuerung durch die Änderung der optischen Leistung der Aufpumpstrahlung;
- die fehlende Möglichkeit, die Ausgangsstimmung der Vorrichtung zu regeln.

Der Erfindung liegt die Aufgabe zugrunde, einen bistabilen optischen Trigger zu entwickeln, der das Kommutieren wechselseitig verbundener optischer Kanäle im Triggerregime, die Lichtsteuerung optischer Impulse in unabhängigen Kanälen und größere Schnelligkeit gewährleistet.

Die Aufgabe wird durch die im Patentanspruch genannten Merkmale gelöst.

Auf diese Weise gestatten es das Vorhandensein zweier $p^+$-$v$-$n^+$-Strukturen, auf die die Spannung fällt, und die Transparenz dieser Strukturen für das gegenüber dem gewählten Halbleiter eigene Licht, der Vorrichtung neue Eigenschaften zu verleihen, die sich von den Eigenschaften vorbekannter Vorrichtungen unterscheiden, und zwar:

1. Die Möglichkeit der Arbeit im Triggerregime, bei dem das optische Steuersignal einen optischen Kanal sperrt und den anderen öffnet. Dieser Zustand hält so lange an, bis der nächste Steuerimpuls in den zweiten Kanal kommt. Solches Regime ist infolge der Umverteilung der Spannung zwischen beiden $p^+$-$v$-$n^+$-Strukturen beim Geben eines optischen Steuerimpulses, infolge der Hysterese-Abhängigkeit in der Charakteristik Licht-Licht des nichtlinearen Fabry-Perot-Interferometers sowie deswegen möglich, daß das Interferometer zum Verbleiben im Resonanzzustand neigt.

2. Die Steuerung mit Hilfe optischer Impulse, die auf den transparenten $p^+$- oder $n^+$-Bereich in die Richtung gegeben werden, die sich von der der optischen Steuerstrahlung unterscheidet. Das ist dadurch bedingt, daß die Resonanzstimmung des Interferometers infolge eines elektrooptischen Effekts bei Änderung der elektrischen Feldstärke erfolgt, die ihrerseits beim Generieren unabhängiger Träger unter Einfluß der optischen Steuerstrahlung umverteilt wird.

3. Größere Schnelligkeit.

4. Die Möglichkeit, im Regime einer Speicherzelle für optische Impulse zu arbeiten, das bei konstanten Werten der Amplitude der Eingangsimpulse möglich ist. Dem Zustand mit der logischen Bedeutung "Null" entspricht der geschlossene Zustand, dem mit der logischen Bedeutung "Eins" entspricht der Transmissionszustand. Die Vorrichtung enthält zwei Speicherzellen, die durch optische Impulse gesteuert werden.

Die Erfindung wird nachstehend anhand von Beispielen für ihre Ausführung und unter Bezugnahme auf die beigefügten Zeichnungen erläutert.

Fig. 1 zeigt den erfindungsgemäßen bistabilen optischen Trigger;

Fig. 2a, b und c sind Diagramme zur Verteilung der Spannung in verschiedenen Zuständen der Vorrichtung;

Fig. 3 zeigt die Resonanzkurve des Fabry-Perot-Interferometers und die Abhängigkeit der Transmission (K) des Resonators von der Verstimmung F;

Fig. 4 gibt Aufschluß über die Abhängigkeit der Charakteristik "Licht-Licht".

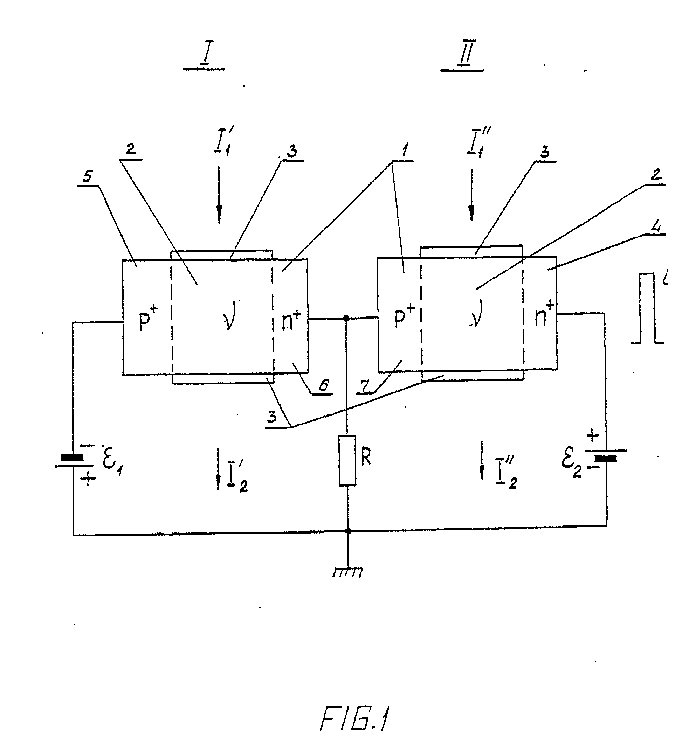

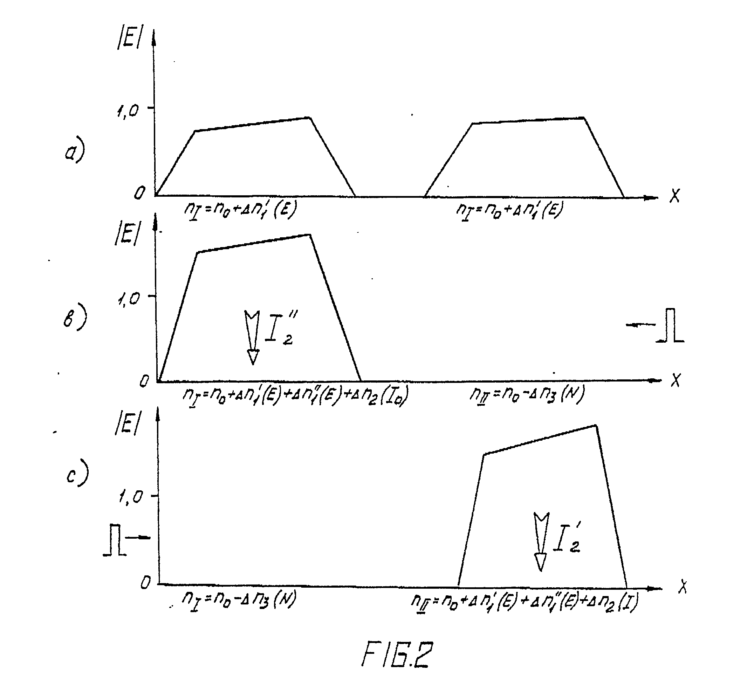

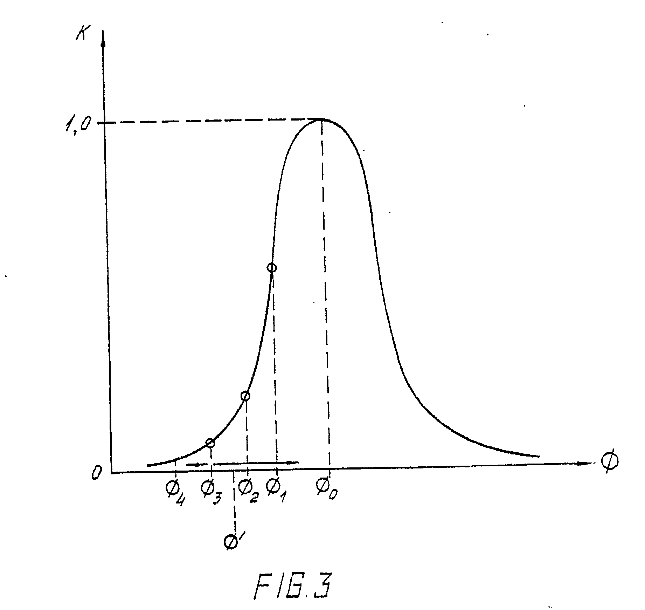

Die angemeldete Vorrichtung (Fig. 1) umfaßt zwei Einkristalle 1 eines elektrooptischen Halbleitermaterials mit $p^+$-v-$n^+$-Strukturen, wo v ein an Trägern armer Bereich 2 ist, sowie Spiegel 3. Der mittlere Punkt der Vorrichtung ist durch den Widerstand R an die Stromquellen $E_1$ und $E_2$ angeschlossen. Die Einkristalle 1 enthalten die Schichten $n^+$ (4) und $p^+$ (5), die transparente Elektroden sind, sowie die Schichten (6) und (7).

Für die Erläuterung der Arbeit der Vorrichtung sei auf einige wichtige Besonderheiten des Effekts der optischen Bistabilität verwiesen. Bekanntlich bestimmt die Spannung, die auf einen elektrooptischen Kristall infolge der Änderung des Brechungsindexes, verursacht durch Feldschwankungen, wirkt, die Art der bistabilen Charakteristik, die sich in Übereinstimmung mit der Kurve des Verstärkers bis hin zu einer zweistelligen Hysteresecharakteristik ändert. Hierbei ist gerade die Hysteresecharakteristik "Licht-Licht" mit zwei stabilen Zuständen von Bedeutung. Es gibt einen gewissen Winkel der Resonatorverstimmung $\phi'$, bei dem die zweistellige Hysteresecharakteristik der optischen Bistabilität noch beobachtet werden kann. Physikalisch wird dieser äußerste Winkel sowohl durch den Grad der Rückkopplung, die (im Falle mit dem Fabry-Perot-Interferometer) vom Transmissionsvermögen der Spiegel abhängt, als auch durch den Wert des nichtlinearen Brechungsindexes des Mediums des Interferometers - $n_2$ - bestimmt.

Bei der optischen Bistabilität vollzieht sich die Resonanzstimmung des Interferometers infolge eines nichtlinearen Effekts - der Änderung des Brechungsindexes des Mediums des Interferometers unter Einwirkung der optischen Strahlung $I_0$, die vom Interferometer gespeichert wird:

$$n = n_0 + n_2 I_0$$

wo $n_0$ der Brechungsindex des Mediums bei fehlender Strahlung ist.

Ein elektrisch anisotropes Material (Dielektrik oder Halbleiter), untergebracht im elektrischen Feld, gestattet es, eine Phasenverzögerung der optischen Welle (Pockels-Effekt) zu erlangen. Dieser Effekt kann für die Stimmung des Interferometers verwendet werden. Andererseits vollzieht sich im Ergebnis der Absorption der Energie der optischen Strahlung im Kristall (absorptionsbedingte Nichtlinearität) eine qualitative Veränderung des Mediums des Interferometers und folglich auch eine Änderung des Indexes der Brechung und der Stimmung des Interferometers.

In der Vorrichtung, der Resonanzeigenschaften des Fabry-Perot-Interferometers zugrunde liegen, werden zwei Effekte genutzt: Der lineare elektrooptische Pockels-Effekt und der nichtlineare Effekt des Zusammenwirkens von Strahlung und Materie.

Die Erscheinung der Änderung des Brechungsindexes durch das Plasma unabhängiger Träger wird für die Verstimmung des Interferometers beim Umschalten optischer Kanäle genutzt, weil dieser Effekt den Brechungsindex verringert.

Verwendet werden folgende Bezeichnungen (Fig. 2):

$\Delta n_1'$ (E) - Änderung des Brechungsindexes unter Einwirkung der ursprünglichen Verteilung der Spannung (Fig. 2a);

$\Delta n_1''$ (E) - Zunahme des Brechungsindexes infolge der Steigerung der elektrischen Feldstärke (Fig. 2b) wegen der Verdrängung des Feldes aus dem aufgehellten Teil der Vorrichtung (ein Steuerimpuls);

$\Delta n_2(I_0)$ - Änderung des Brechungsindexes infolge des nichtlinearen Zusammenwirkens der Strahlung mit dem Medium des Interferometers (Fig. 2b,c);

$\Delta n_3(N)$ - Änderung des Brechungsindexes im Ergebnis der Fotoinjektion unabhängiger Träger durch Steuerimpulse, wo N Konzentration unabhängiger Träger bedeutet (Fig. 2b,c).

Die Vorrichtung funktioniert folgendermaßen:

Im Ausgangszustand werden in die Vorrichtung eine elektrische Verschiebung von $E_1$ und $E_2$ mit Polarität, die anders ist als beim Übergang, sowie in den ersten Kanal (I) die steuerbare Strahlung $I_1'$ und in den zweiten Kanal (II) die steuerbare Strahlung $I_1''$ gegeben. Die Verteilung der elektrischen Feldstärke im Ausgangszustand ist auf Fig. 2a abgebildet.

Beim Geben des optischen Steuerimpulses i in den zweiten Kanal (II) (Fig. 2b) werden in den v- und $n^+$-Bereichen des zweiten Kanals unabhängige Träger vom Steuerlicht i generiert. Das führt zur Verminderung des Wertes des elektrischen Feldes im zweiten Kanal, zur Umverteilung der Spannung in der Vorrichtung und zur Veränderung der Brechungsindices auf Werte:

$$n_I = N_0 + \Delta n_1' (E) + \Delta n_1'' (E); \quad \Delta n_{II} = n_0 - \Delta n_3(N),$$

was zu einer noch stärkeren Verstimmung des zweiten Interferometers (Übergang zum Wert $\phi_4$) und zur Stimmung (Übergang zum Wert $\phi_2$) des ersten Interferometers (Fig. 3) führt.

In diesem Zustand beginnt die Intensität der Eingangsstrahlung I den Schwellenwert $I^I$ (Fig. 3) zu überschreiten. Das führt zum Aufhellen des Fabry-Perot-Interferometers, zum Übergang zum Verstimmungswert $\phi_1$ und weiter zu $\phi_0$ sowie zur Öffnung des ersten Kanals infolge des Effekts der optischen Bistabilität. Der erste Kanal (I) öffnet sich wegen der Erhöhung des Brechungsindexes auf den Wert:

$$n_I = n_0 + \Delta n_1' (E) + \Delta n_1'' (E) + \Delta n_2(I_0),$$

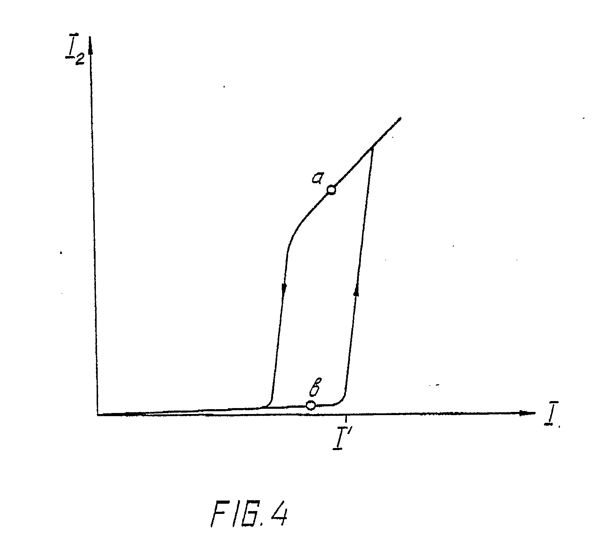

der der präzisen Resonanzstimmung entspricht, wie auch wegen der drastischen Erhöhung des Transmissionsvermögens des Interferometers. Dabei wird die Charakteristik der optischen Bistabilität (Fig. 4) mit einem stabilen "oberen" Zustand ("a") gegenüber der Intensität der optischen Strahlung erreicht.

Bei stetigen Werten der optischen Steuerstrahlung werden im Gerät zwei Zustände erreicht:

- Beim Geben der optischen Steuerimpulse i in den $n^+$-Bereich des zweiten Kanals (II) wird der erste Kanal (I) geöffnet und der zweite (II) geschlossen. Dieser Zustand hält solange an, bis Steuerimpulse in den $p^+$-Bereich des ersten Kanals (I) gegeben worden sind (Fig. 2b);

- beim Geben der optischen Steuerimpulse i in den $p^+$-Bereich des ersten Kanals (I) wird der zweite Kanal (II) geöffnet und der erste (I) geschlossen. Dieser Zustand hält solange an, bis Steuerimpulse in den $n^+$-Bereich des zweiten Kanals (II) gegeben worden sind (Fig. 2c).

Die Schließung des Kanals des optischen Triggers vollzieht sich im Ergebnis des gleichzeitigen Eintretens des elektrooptischen Effekts (bei Verminderung des elektrischen Feldes und dementsprechend auch des Brechungsindexes) und der Abhängigkeit des Brechungsindexes von der Lichtintensität (Verringerung des Brechungsindexes in Übereinstimmung mit der Konzentration unabhängiger Träger). Die Öffnung erfolgt unter Einwirkung des nichtlinearen und des elektrooptischen Effektes (bei Zunahme des elektrischen Feldes), die den Brechungsindex erhöhen.

Eine kurzzeitige Erhöhung der elektrischen Feldstärke im "dunklen" Kristall reicht für die Öffnung des Kanals und für die Aufrechterhaltung des Zustandes der Lichttransmission ungeachtet dessen aus, daß die elektrische Feldstärke nach der Beendigung des Steuerimpulses zu ihrem ursprünglichen Wert zurückkehrt. Die Aufrechterhaltung des Transmissionszustandes ist möglich (ungeachtet der Verringerung der elektrischen Feldstärke auf den Ausgangswert, Fig. 2a), weil der "obere" Zustand in der bistabilen Hysteresecharakteristik (Fig. 4) Abweichungen im Brechungsindex ohne Abreißen in den ursprünglichen "unteren" Zustand zuläßt, weil eine geringe Veränderung ($|\Delta n_1' - \Delta n_1''|$), verursacht durch die ursprüngliche (Fig. 2a) Verteilung der elektrischen Feldstärke, lediglich zu einer geringfügigen Senkung des Resonanzwerts der Lichtintensität innerhalb des Interferometers I (wegen der eingetretenen Verstimmung) und zur Intensivierung der Absorption führt, die vom Absorptionskoeffizient $A_{abs.}$ bestimmt wird. Bekanntlich wird der Zustand des Interferometers durch das Produkt von zwei Größen bestimmt - $I_0 \cdot A_{abs.}$. Solange $I_0 \cdot A_{abs.} = \text{const.}$, bleibt der "obere" Zustand "a" der bistabilen Charakteristik aufrechterhalten (Fig. 4). Mit anderen Worten ist im Resonanzzustand der Wert der Veränderung des Brechungsindexes unter Einfluß der optischen Strahlung derart groß, daß eine geringfügige Verringerung dieses Wertes bei der Senkung der elektrischen Feldstärke das Interferometer nicht aus dem Resonanzzustand herausführt.

Beim Einschalten der Steuerimpulse werden jedoch die Spannungen in die andere Hälfte des Kristalls restlos verdrängt. Dabei sinkt der Brechungsindex, und der Kanal wird geschlossen.

Die Stabilität der Arbeit der angemeldeten Vorrichtung ist durch die Erfüllung der Ungleichung $|\Delta n_3(N)| > |\Delta N_2(I_0)| > |\Delta n_1'(E)|$ bedingt. Die Größe $\Delta n_1''(E)$ gleicht $\Delta n_1'(E)$.

Für GaAs sehen diese Größen entsprechend so aus:

$\Delta n_3(N) = 5 \cdot 10^{-2}$ beim Injektionsniveau von $10^{10} \text{cm}^{-3}$ (Injektionsniveaus von $10^{10} : 10^{17} \text{cm}^{-3}$ stören nicht die Arbeit der Vorrichtung);

$\Delta n_2(I_0) \approx 4 \cdot 10^{-3}$ bei der Dichte der Eingangsleistung von $10 \text{W/cm}^2$, $n_2 = 4$.

$\Delta n_1'(E) = 3 \cdot 10^{-4}$ bei der elektrischen Feldstärke von $10^5$ W/cm, dem elektrischen Koeffizient von $v = 1,6 \cdot 10^{10}$ W/cm und bei $n_0 = 3,34$.

Bei der Herstellung der Vorrichtung wird das Abspalten von Flächen des hochohmigen Halbleiters GaAs (InSb) CdTe) angewandt, so daß zwei parallele Flächen des Parallelepipeds den Fabry-Perot-Interferometer bilden. An zwei Stirnflächen des Parallelepipeds werden Legierungselemente diffundiert und die Struktur $p^+$-v-$n^+$ gebildet.

Der mittlere Punkt wird über den Widerstand R = 50-100 Ω an die Spannungsquelle $E_1$ und $E_2$ - (höchstens 100 V) angeschlossen.

Bevorzugte Anwendungsbereiche der Erfindung sind lichtleitende Verbindungs- und Datenübertragungssysteme, Systeme der Integraloptik und der Rechentechnik.


## Ansprüche

Bistabiler optischer Trigger, umfassend ein durch einen Halbleiterkristall (1) und einen Spiegel (3) gebildetes Fabry-Perot-Interferometer, **dadurch gekennzeichnet,** daß zwei $p^+$-v-$n^+$-Strukturen, auf einer von denen die $n^+$-Schicht (4) und auf der anderen die $p^+$-Schicht (5) transparente Elektroden bilden, miteinander in Reihe angeordnet sowie mit zwei Spannungsquellen ($E_1$, $E_2$) verbunden sind, die mit umgekehrter Polarität an die $p^+$-v-$n^+$-Strukturen angeschlossen sind, wobei der mittlere Punkt der elektrischen Verbindung der $p^+$-Schicht (7) der einen Struktur mit der $n^+$-Schicht (6) der anderen Struktur über einen Widerstand R an einen gemeinsamen Fußpunkt der Spannungsquellen ($E_1$, $E_2$) angeschlossen ist.

FIG.1

FIG.2

FIG.3

FIG.4